# EUROPÄISCHE PATENTSCHRIFT

(11) **EP 1 229 221 B1**
(45) Veröffentlichungstag und Bekanntmachung des Hinweises auf die Patenterteilung: **20.08.2003**
(21) Anmeldenummer: 02000854.6
(22) Anmeldetag: 15.01.2002
(51) Int. Cl.: F01N 7/10, F01N 3/36, F02M 25/07

(54) **Abgaskrümmer mit einer Flanschplatte aus geglühtem Metallpulver die einen Kanal für Abgasrückführung oder Sekundärluftzugabe aufweist**
Exhaust manifold comprising a sintered connecting flange having a channel for EGR or secondary air supply
Collecteur d'échappement avec bride de fixation fritté comprenant un conduit pour une recirculation des gaz d'échappement ou une injection d'air secondaire

(30) Priorität: 01.02.2001 DE 10104840
(43) Veröffentlichungstag der Anmeldung: 07.08.2002
(73) Patentinhaber: Benteler Automobiltechnik GmbH, 33104 Paderborn (DE)
(72) Erfinder: Grussmann, Elmar, 33184 Altenbeken (DE); Smatloch, Christian Dr., 33100 Paderborn (DE); Kleinschmidt, Jürgen, 37688 Beverungen (DE)
(74) Vertreter: Bockermann, Rolf, Dipl.-Ing.

(56) Entgegenhaltungen:
- EP-A- 0 582 985
- DE-A- 10 009 389
- US-A- 5 572 867

## Beschreibung

Die Erfindung betrifft eine Vorrichtung zur Weiterleitung von aus Verbrennungsmotoren tretenden Abgasen.

Eine solche Vorrichtung weist eine Koppelplatte auf, die aus Stahlguss gefertigt oder geschmiedet sein kann. Diese Koppelplatte wird lösbar an einen Motorblock geflanscht. Andererseits trägt die Koppelplatte gasführend miteinander verbundene gekrümmte Abgaskanäle, die an die Koppelplatte geschweißt sind.

Darüberhinaus ist es bekannt, in einer solchen Koppelplatte Kanäle für eine Abgasrückführung und/oder eine Sekundärluftzuführung vorzusehen.

Unabhängig davon, ob nun eine Koppelplatte gegossen oder geschmiedet ist, muss sie in vielen Bereichen mechanisch nachbearbeitet werden. So erfordert beispielsweise die Zusammenfügung der Abgaskanäle mit der Koppelplatte genaue Passsitze. Auch müssen die Kanäle für die Abgasrückführung und/oder die Sekundärluftzuführung in die Koppelplatte eingearbeitet werden. Alle diese Maßnahmen verlangen eine aufwendige Nacharbeitung, und zwar sowohl was den zeitlichen als auch den maschinellen Faktor anlangt. Außerdem ist festzuhalten, dass sowohl eine gegossene als auch eine geschmiedete Koppelplatte nur schwer schweißbar ist und dann, insbesondere im Schweißverbund mit den Abgaskanälen, häufig die technisch geforderten Festigkeitseigenschaften nicht mehr erreicht werden.

Die DE 42 14 796 A1 offenbart einen Auspuffkrümmer für Verbrennungsmotoren mit Sekundärluftanlage zum schnellen Aufheizen eines Abgas-Katalysatorsystems. In den Motorflansch des Auspuffkrümmers ist mindestens ein endseitig verschlossenes Stahlrohr eingegossen, welches über in das Gussmaterial des Motorflansches eingebrachte Kanäle mit der Luftzuführung und Luftverteilung verbunden ist. Bevorzugt werden die Kanäle durch Bohren hergestellt.

Die DE 100 09 389 A1 befasst sich mit einem Hybridabgasverteiler für Verbrennungsmotoren. Dieser Hybridabgasverteiler weist einen einteiligen hohlen Körper auf, der mehrere integrale Einlassabschnitte besitzt, die mit jeweils voneinander getrennten Einlassflanschen verschweißt sind.

Der Erfindung liegt - ausgehend vom Stand der Technik - die Aufgabe zugrunde, eine Vorrichtung zur Weiterleitung von aus Verbrennungsmotoren tretenden Abgasen zu schaffen, welche präzise herstellbar ist und dennoch einen geringen Fertigungsaufwand fordert.

Diese Aufgabe wird mit den im Patentanspruch angegebenen Merkmalen gelöst.

Die Koppelplatte besteht danach aus unter hohem Druck in eine Form gepresstem und anschließend geglühtem Metallpulver. Als Metallpulver wird insbesondere Stahlpulver eingesetzt. Wird ein solches Metallpulver in eine die Koppelplatte definierende Form gepresst, und zwar etwa unter einem Druck von 650 N/mm², so kann die Geometrie der Koppelplatte derart exakt bestimmt werden, dass keine Nachbearbeitungen mehr erforderlich sind. Wenn anschließend die Koppelplatte bei einer Temperatur von etwa 1.400 °C geglüht wird, erhält das Metallpulver eine Grundfestigkeit, die dem des Ausgangsmaterials, also dem des Metallpulvers, weitgehend entspricht.

Mit der Erfindung ist der große Vorteil verbunden, dass auch vergleichsweise komplizierte Geometrien, insbesondere bei der Unterbringung von nutenartigen Kanälen für die Abgasrückführung und/oder die Sekundärluftzuführung, ohne weiteres exakt erzeugt werden können. Die gestalterische Vielfalt einer solchen Koppelplatte ist damit hoch. Sie ist ferner kostengünstig zu fertigen, da nach dem Pressen und Glühen keine zusätzlichen mechanischen Bearbeitungen erforderlich sind. Des Weiteren weist die Koppelplatte eine sehr gute Schweißbarkeit auf, so dass ihre Verbindung mit den untereinander relativ verlagerbar ineinander geführten Abgaskanälen die technisch jeweils geforderten Festigkeitseigenschaften gewährleistet.

Die Erfindung ist nachfolgend anhand eines in der Zeichnung veranschaulichten Ausführungsbeispiels näher erläutert. Es zeigen:
- Figur 1: eine Vorrichtung zur Weiterleitung von Abgasen in der Draufsicht;
- Figur 2: einen horizontalen Längsschnitt durch die Vorrichtung der Figur 1;
- Figur 3: einen vertikalen Längsschnitt durch die Darstellung der Figur 2 entlang der Linie III-III in Richtung der Pfeile IIIa gesehen, und
- Figur 4: einen Querschnitt durch die Darstellung der Figur 3 entlang der Linie IV-IV in Richtung der Pfeile IVa gesehen.

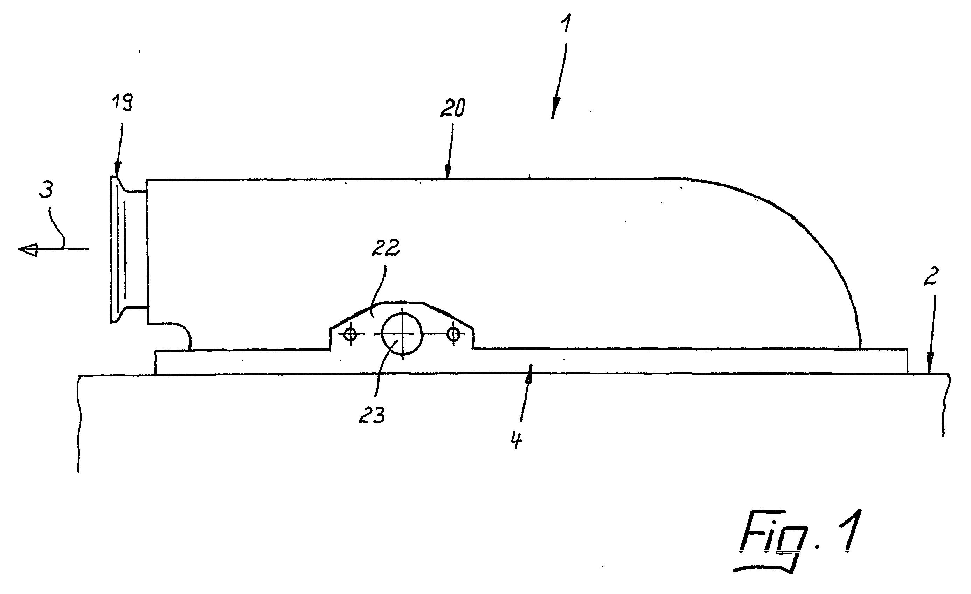

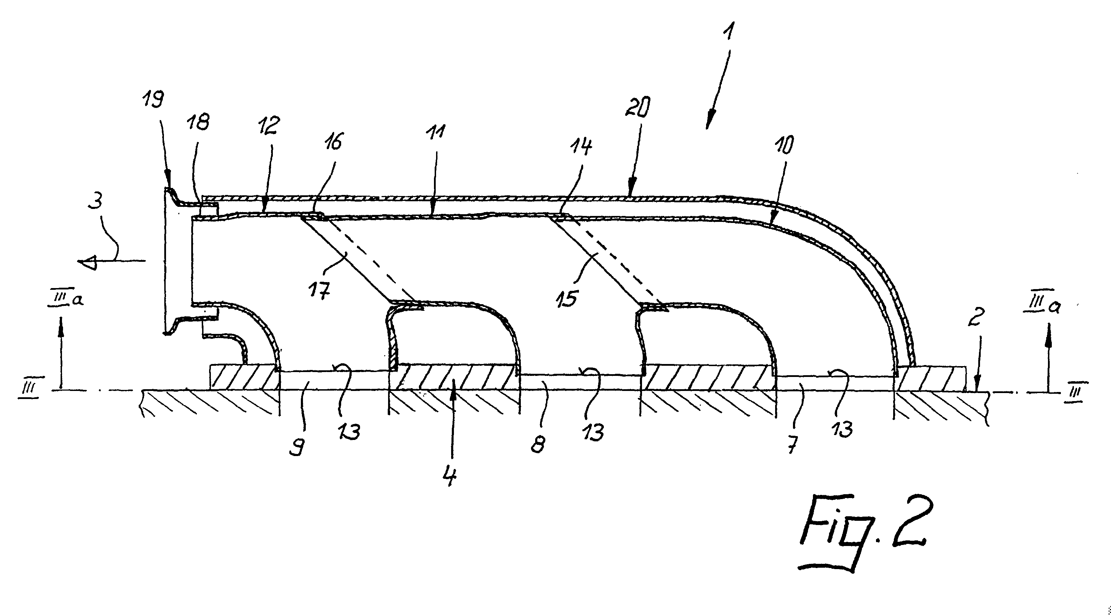

Mit 1 ist in den Figuren 1 bis 3 eine Vorrichtung zur Weiterleitung von aus einem Verbrennungsmotor 2 tretenden Abgasen in eine Abgasleitung 3 bezeichnet. Der Verbrennungsmotor 2 ist in den Figuren 1 und 2 lediglich hinsichtlich seines Motorblocks schematisch angedeutet. Die Abgasleitung ist nur durch den Pfeil 3 veranschaulicht.

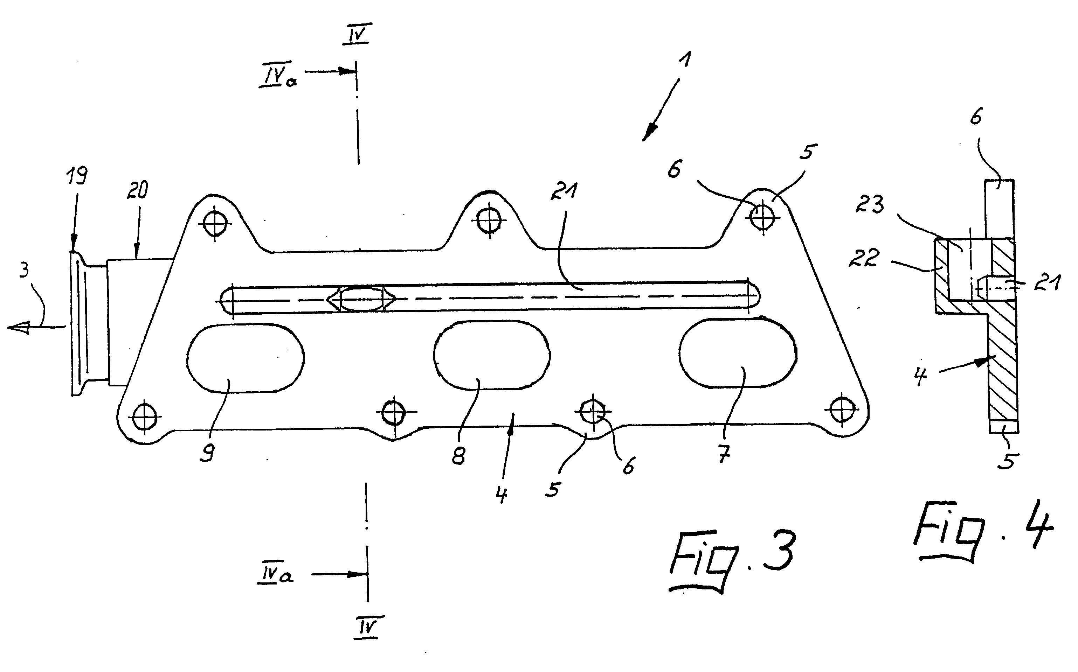

Die Vorrichtung 1 weist eine Koppelplatte 4 auf, welche über die aus den Figuren 3 und 4 erkennbaren ohrenartigen Vorsprünge 5 mit Bohrungen 6 an den Motorblock 2 flanschbar ist.

Die Koppelplatte 4 besteht aus unter hohem Druck in eine Form gepresstem und anschließend geglühtem Metallpulver. Unter hohem Druck wird im vorliegenden Fall ein Druck von 650 N/mm² verstanden. Das Glühverfahren des gepressten Metallpulvers findet bei einer Temperatur von etwa 1.400 °C statt.

Wie bei gemeinsamer Betrachtung der Figuren 1 bis 3 weiter erkennbar ist, besitzt die Koppelplatte 4 drei in Reihe hintereinander im Abstand angeordnete oval konfigurierte Überleitöffnungen 7, 8, 9 für aus dem Verbrennungsmotor 2 tretende Abgase. Diese Überleitöffnungen 7-9 münden in, insbesondere aus der Figur 2 erkennbare, bogenförmig gekrümmte Abgaskanäle 10, 11, 12, welche in Absätzen 13 der Überleitöffnungen 7-9 schweißtechnisch festgelegt sind.

Von den drei Abgaskanälen 10-12 mündet der in der Zeichnungsebene der Figur 2 liegende rechte 1. Gaskanal 10 in den mittleren 2. Abgaskanal 11. Dazu übergreift der mittlere 2. Abgaskanal 11 mit einem kurzen schrägen Stutzen 14 das schräge Ende 15 des 1. Abgaskanals 10. Der mittlere 2. Abgaskanal 11 mündet wiederum in den in der Zeichnungsebene der Figur 2 links liegenden 3. Abgaskanal 12. Auch dieser 3. Abgaskanal 12 übergreift mit einem kurzen schrägen Stutzen 16 das schräge Ende 17 des 2. Abgaskanals 11. Der 1. und 2. Abgaskanal 10, 11 einerseits sowie der 2. und 3. Abgaskanal 11, 12 andererseits sind relativ verlagerbar ineinander geführt.

Der 3. Abgaskanal 12 mündet mit einem Stutzen 18 in eine Anschlussmuffe 19, die in nicht näher dargestellter Weise mit der Abgasleitung 3 verbunden ist.

Die Abgaskanäle 10-12 werden insgesamt mit Abstand von einer Haube 20 übergriffen, die auf der Koppelplatte 4 schweißtechnisch befestigt ist.

Sowohl die Abgaskanäle 10-12 und die Anschlussmuffe 19 als auch die Haube 20 bestehen aus Stahlblech, das einen ausreichenden Widerstand gegen die auftretenden Abgastemperaturen aufweist.

Aus den Figuren 3 und 4 ist noch erkennbar, dass sich neben den Überleitöffnungen 7-9 in der Koppelplatte 4 ein nutenartiger Kanal 21 erstreckt. Dieser Kanal 21 ist in nicht näher veranschaulichter Weise mit dem Motorblock 2 verbunden. Er dient der Zuführung von Sekundärluft. Zu diesem Zweck ist der Kanal 21 über eine aus den Figuren 1 und 4 erkennbare Konsole 22 mit Bohrung 23 als einstückiger Bestandteil der Koppelplatte 4 an eine nicht näher veranschaulichte Pumpe zur Zuführung der frischen Sekundärluft angeschlossen.

### Bezugszeichenaufstellung

- 1 -: Vorrichtung
- 2 -: Verbrennungsmotor
- 3 -: Abgasleitung
- 4 -: Koppelplatte
- 5 -: Vorsprünge an 4
- 6 -: Bohrungen in 5
- 7 -: Überleitöffnung
- 8 -: Überleitöffnung
- 9 -: Überleitöffnung
- 10 -: 1. Abgaskanal
- 11 -: 2. Abgaskanal
- 12 -: 3. Abgaskanal
- 13 -: Absätze in 7-9
- 14 -: Stutzen v. 11
- 15 -: Ende v. 10
- 16 -: Stutzen v. 12
- 17 -: Ende v. 11
- 18 -: Stutzen v. 12
- 19 -: Anschlussmuffe
- 20 -: Haube
- 21 -: Kanal in 4
- 22 -: Konsole
- 23 -: Bohrung in 22

## Patentansprüche

1. Vorrichtung zur Weiterleitung von aus Verbrennungsmotoren tretenden Abgasen, welche eine an einen Motorblock (2) flanschbare Koppelplatte (4) aufweist, in der mehrere in mit der Koppelplatte (4) schweißtechnisch verbundene, untereinander relativ verlagerbar ineinander geführte Abgaskanäle (10, 11, 12) mündende Überleitöffnungen (7, 8, 9) für die Abgase sowie neben den Überleitöffnungen (7, 8, 9) mindestens ein nutenartiger Kanal (21) für eine Abgasrückführung und/oder eine Sekundärluftzuführung vorgesehen sind, wobei die Koppelplatte (4) aus unter hohem Druck in eine Form gepresstem und anschließend geglühtem Metallpulver besteht.

## Claims

1. A device for the transmission of exhaust gases from internal combustion engines, comprising a coupling plate (4) adapted to be flanged on an engine block (2) and in which there are provided a plurality of transfer ports (7, 8, 9) for the exhaust gases, said ports leading into exhaust ducts (10, 11, 12) which are connected by welding to the coupling plate (4) and which pass one inside the other for displacement relatively to one another, and, next to the transfer ports (7, 8, 9), at least one channel (21) in the form of a slot for exhaust gas recycling and/or a secondary air supply, the coupling plate (4) consisting of metal powder pressed under high pressure in a mould and then annealed.

## Revendications

1. Dispositif pour l'évacuation des gaz d'échappement produits par des moteurs à combustion, lequel dispositif présente une plaque d'accouplement (4) pouvant être bridée sur un bloc moteur (2), dispositif dans lequel il est prévu plusieurs ouvertures d'écoulement (7,8,9) pour les gaz d'échappement, ouvertures d'écoulement (7,8,9) qui débouchent dans des canaux de gaz d'échappement (10,11,12) guidés les une dans les autres et pouvant être décalés les uns au-dessous des autres, raccordés par soudage à la plaque d'accouplement (4) ainsi qu'à côté des ouvertures d'écoulement (7,8,9) il est prévu au moins un canal en forme de gorge (21) pour un recyclage des gaz d'échappement et/ou une injection d'air secondaire, tandis que la plaque d'accouplement (4) consiste en une poudre métallique comprimée à haute pression dans un moule et qui est consécutivement recuite.
